# EUROPEAN PATENT SPECIFICATION

(11) **EP 0 677 971 B1**
(45) Date of publication and mention of the grant of the patent: **01.12.1999**
(21) Application number: 95302473.4
(22) Date of filing: 12.04.1995
(51) Int. Cl.: H04N 9/68

(54) **Reproduction circuit for skin color in video signals**
Hautfarbewiedergabeschaltung für Videosignalen
Circuit de reproduction pour la couleur de peau dans des signaux vidéo

(30) Priority: 15.04.1994 JP 7709094
(43) Date of publication of application: 18.10.1995
(73) Proprietor: MATSUSHITA ELECTRIC INDUSTRIAL CO., LTD., Kadoma-shi, Osaka-fu, 571 (JP)
(72) Inventor: Takeshima, Masahiro, Ibaraki-shi, Osaka, 567 (JP)
(74) Representative: Crawford, Andrew Birkby

(56) References cited:
- US-A- 5 269 289

## Description

### BACKGROUND OF THE INVENTION

The present invention relates to quality enhancement of reproducing a skin color signal in video signals, and more particularly relates to a circuit which enhances a reproduction quality of skin color in video signals responding to an average luminance level of video signals, a skin color area in the video signals, and an average luminance level of skin color in the video signals, and further relates to improving the circuit which enhances a reproduction quality of skin color in the video signals responding to a skin color area in the video signals, an average luminance level of skin color in the video signals and an average luminance level in the video signals.

Recently, a television receiver (TV) with a wider screen have drawn remarkable attention on the market. Consequently, the demand on picture quality becomes more severer. Since human eyes are particularly sensitive on the skin color reproduction, the skin color reproduction capability greatly influences a picture quality.

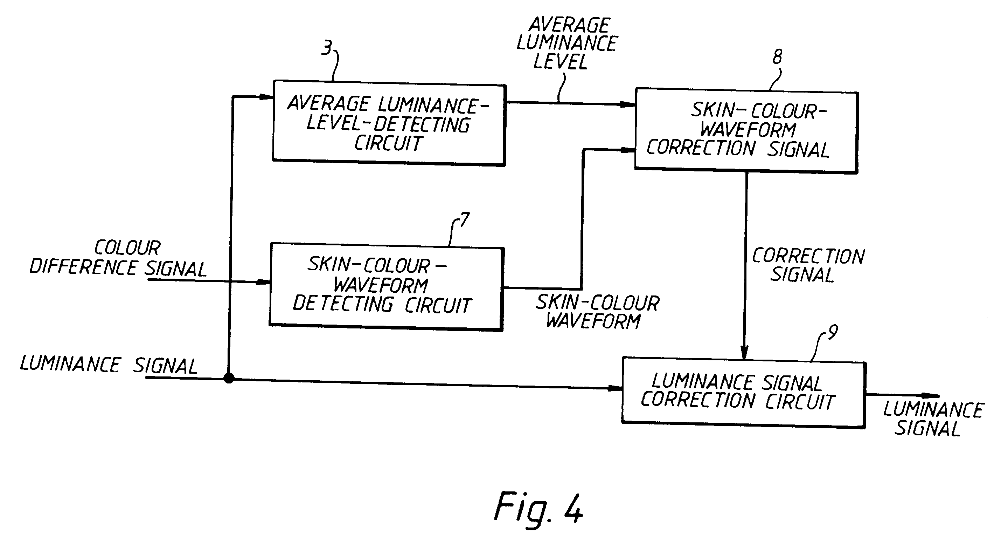

Japanese Laid Open Patent Publication H7-222188 discloses a circuit for improving the reproduction quality of skin color signal in the video signals and this prior art is described here In particular Fig. 4 is a block diagram of a skin-color-luminance enhancement circuit according to this piece of prior art.

Within Figure 4, an average luminance-level detector 3 detects an average luminance level of an input video signal. When video luminance signal of one frame is integrated, an average luminance in one frame is found.

Skin-color-waveform detecting circuit (hereinafter called "detector") 7 detects a skin color signal from a color-difference signal of fed video signals. The average luminance output from average-luminance-level detector 3 and the skin-color waveform output from the skin-color waveform detector 7 are fed to skin color-waveform correction circuit (hereinafter called "corrector") 8.

An output of a correction signal from the color-waveform corrector 8 is fed to a luminance-signal-corrector 9, where a correction signal is added to the luminance signal before output.

The conventional skin-color-luminance enhancement circuit so structured as above enhances the skin-color-luminance level responding to an average luminance level of the video signal, although the skin color was darkened and also dimmed by secondary effects from Auto Contrast Level which adjusts beam intensity from a cathode ray tube (CRT) as well as from Black Level Enhancement which adjusts a black level in the video signal.

According to this conventional structure, a skin color is corrected by using only the average luminance level of the video signal, and thus the skin color is not adequately corrected in accordance with responding to skin color condition. Consequently, gradation on skin color is not fully displayed, for an average luminance level of the video signal may stand at high level even if the luminance level of skin color keeps high enough, which further boosts the skin-color luminance. The conventional structure has such a problem as above.

The present invention relates to a skin-color reproduction circuit which enables TV viewers to see optimal skin-color reproduction responding to picture condition.

### SUMMARY OF THE INVENTION

The present invention relates to a skin-color reproduction circuit which enables TV viewers to see optimal skin-color reproduction responding to picture condition. According to the present invention, there is provided a skin colour enhancement circuit for enhancing the reproduction of skin-colour in a video signal, said video signal including at least two colour difference signals and a luminance signal, each signal having a respective skin-colour component, said circuit comprising at least one of:
a skin colour area detector arranged to detect an area which is of skin colour in one frame of said video signal from said colour difference signals, and to output a skin colour area signal corresponding to said detected area; and/or
an average skin-colour luminance level detector arranged to detect an average skin-colour luminance level in one frame of said video signal from said colour difference signals and said luminance signal, and to output an average skin-colour luminance signal corresponding to the detected average skin-colour luminance level;
and further comprising:
an average luminance level detector arranged to detect an average luminance level in one frame of said video signal from said luminance signal, and to output an average luminance-level signal corresponding to the detected average luminance level;
skin colour correction means arranged to receive said average luminance level signal in combination with at least one of said skin colour area signal and/or said average skin-colour luminance level signal in one frame of said video signal, and to generate a skin-colour correction signal therefrom;
saturation control means arranged to receive said skin-colour correction signal, and to apply a saturation control to the skin-colour components of said colour difference signals in response to said skin-colour correction signal; and
luminance signal correction means arranged to receive said skin-colour correction signal and to apply a signal correction in response to said skin-colour correction signal to the skin-colour component of the luminance signal whereby the respective skin-colour component in each of said colour difference signals and said luminance signal is thus corrected.

According to a first configuration of the present invention, a skin-color-correction signal responding to an input signal is produced by computing such inputs representing a state of a video signal as fed outputs from the skin-color-area detector and from the average-luminance-level detector.

According a second configuration of the present invention, a skin-color-correction signal responding to an input signal is produced by computing such inputs representing a state of a video signal as fed outputs from the average luminance-level detector and from the average skin-color-luminance-level detector.

According to a third configuration of the present invention, a skin-color-correction signal responding to an input signal is produced by computing such inputs representing a state of a video signal as fed outputs from the skin-color-area detector, the average skin-color-luminance-level detector, and the average luminance-level detector.

In the three configurations, an optimal skin-color correction which responds to the video signal condition is conducted by using the output signal from each skin-color corrector at the saturation controller as well as the luminance signal-corrector.

### BRIEF DESCRIPTION OF THE DRAWINGS

Fig. 1 is a block diagram of a skin-color reproduction circuit of a first exemplary embodiment according to the present invention.

Fig. 2 is a block diagram of the skin-color reproduction circuit of a second exemplary embodiment according to the present invention.

Fig. 3 is a block diagram of a skin-color reproduction circuit of a third exemplary embodiment according to the present invention.

Fig. 4 is a block diagram of a skin-color-luminance enhancement circuit of a video signal according to a prior art.

### DETAILED DESCRIPTION OF THE EMBODIMENT

### First Exemplary Embodiment

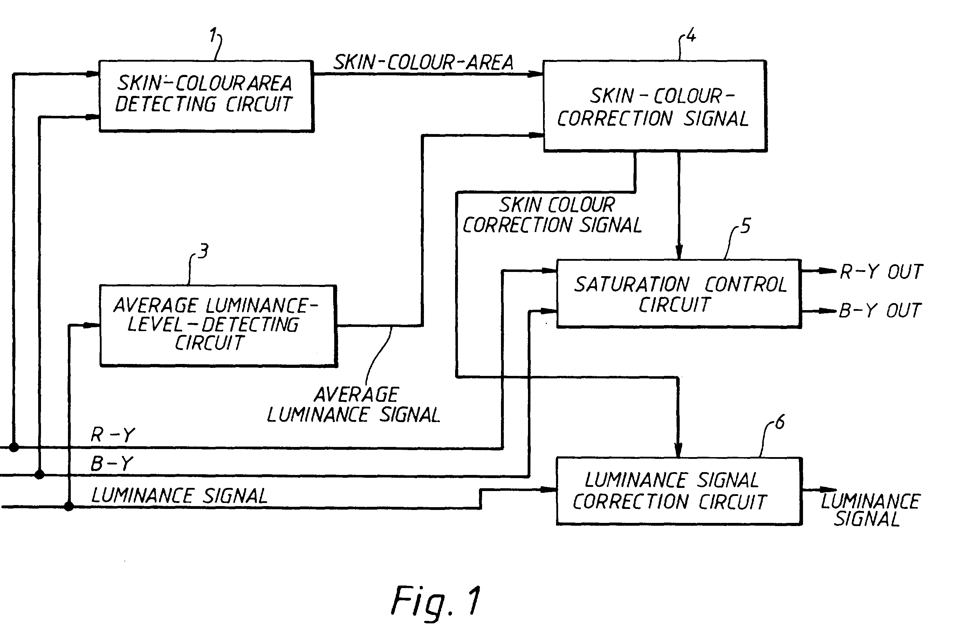

Fig. 1 is a block diagram illustrating a skin-color reproduction circuit of a first exemplary embodiment according to the present invention. In Fig. 1, skin-color-area detector 1 detects skin-color area in one frame from color difference signals R-Y and B-Y of input video signals, and supply the detected skin-color-area to skin-color corrector 4.

Average-luminance-level detector 3 detects an average-luminance-level in one frame from an intensity signal of input video signals, and supply the detected average-luminance-level to skin-color corrector 4.

The detected skin-color-area and the detected average-luminance-level are fed into the skin-color-corrector 4 to produce a skin-color-correction signal responding to both the skin-color-area and the average luminance-level in one frame of input video signals.

The skin-color-correction signal from skin-color-corrector 4 and the color difference signals R-Y, B-Y of video signals are fed to saturation controller 5 to apply a saturation control responding to the skin-color-correction signal to a skin-color component in the color difference signals of the video signal.

Luminance signal corrector 6 applies a signal correction responding to the skin-color-correction to the skin-color component in the luminance signal of the video signal by feeding the skin-color-correction signal from skin-color-corrector 4 and the luminance signal of the video signal.

An operation of the skin-color reproduction circuit having the above configuration is explained here:

First, at skin-color-area detector 1 in Fig. 1, the skin-color-area in one frame is detected from the color difference signals R-Y, B-Y, and the detected area is transduced into a voltage.

A prior art teaches that the color difference signal R-Y is behind the color difference signal B-Y by 90 degrees, and so called "skin-color-signal" is behind the color difference signal B-Y by around 120 degrees (Phase location A). Therefore, when color-difference-signals B-Y and R-Y within a certain phase-scope from Phase location A are extracted and compounded, a skin-color signal can be detected. It is obvious when varying a threshold of the phase-scope, a detection area can be changed depending on a scope of skin color.

Therefore, integral of a duration time detecting the skin-color in one frame (or one field) period would find an area of skin-color in one frame (or one field).

Second, at the average-luminance level detector 3, the average luminance level in one frame (or one field) is detected from the luminance signal of the input video signal, and the detected level is transduced into a voltage. As a prior art teaches, integral of video intensity signals in one frame would find an average luminance in one frame.

Not to mention, an output from a detector is not limited to a voltage but may be an electric current.

The detected values of skin-color-area and average-luminance level are multiplied by coefficients when necessary, and are fed to skin-color-corrector 4 to produce the skin-color correction signal responding to the average luminance level and skin-color-area in one frame before being transduced into a voltage or an electric current as an output.

The output skin-color-correction signal is first fed to saturation controller 5, and next, color difference signals R-Y, B-Y are multiplied by the coefficients α and β, then the skin-color component of R-Y and B-Y is multiplied with a saturation control responding to skin-color correction signals.

The skin-color-correction signal is also fed to luminance corrector 6, multiplied by the coefficient γ before the skin-color component of the luminance signal is multiplied by signal correction.

At saturation controller 5 and luminance signal corrector 6, it is obvious that only a certain part of phase threshold of the color difference signals B-Y, R-Y may be controlled in order to control only the skin-color component.

According to the above exemplary embodiment 1, saturation of the skin-color component is controlled depending on the result of detecting the average luminance-level and skin-color-area in one frame, and the skin-color component of the luminance signal is controlled depending on the result of detecting the skin-color-area and average luminance level in one frame, and thereby a skin-color can be optimumly corrected in responding to the skin-color-area as well as the average-luminance-level of the picture.

### Second Exemplary Embodiment

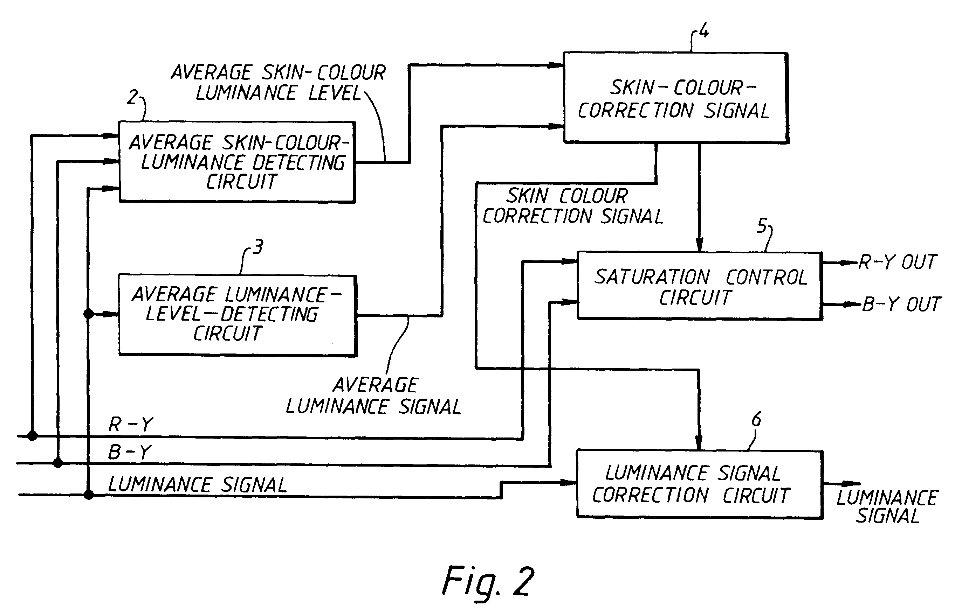

Fig. 2 is a block diagram illustrating the skin-color reproduction circuit of a second exemplary embodiment according to the present invention. The configuration in Fig. 2 has an average skin-color-luminance-level detector 2 instead of the skin-color detector 1 in Fig. 1. The average skin-color-luminance level detector 2 detects the average luminance-level of the skin-color in one frame from the color difference signals R-Y, B-Y and the luminance signal of the input video signal.

Since other than this point in configuration is same as the first exemplary embodiment, the detailed description is omitted.

An operation of the skin-color reproduction circuit having the above configuration is explained here:

First, at average skin-color-luminance-level detector 2 in Fig. 2, the average luminance-level of the skin-color-component in one frame is detected by using the color difference signals R-Y, B-Y and intensity signals, and then the result of detecting is transduced into voltage.

The method of detecting the average-intensity-level of the skin-color-component was explained in the first exemplary embodiment: "Detect and integrate the video intensity signals for duration of skin-color detection".
Then, divide the result by the skin-color area, and the average luminance level is found.

Second, at average luminance-detector 3, the average luminance level in one frame is detected from the luminance signal of video signals, and the result of detecting is transduced into voltage. Not to mention, the output from the detector is not limited to a voltage, but an electric current may be used.

Those detected values are fed to skin-color-corrector 4 shown in Fig. 2 to produce the skin-color-correction signal responding to the average luminance level of skin-color in one frame and the average luminance level in one frame, and the skin-color-correction signal is transduced into a voltage or an electric current before output.

The output skin-color-correction signal from the skin-color-corrector is first fed to saturation controller 5 to apply the saturation control responding to the skin-color-correction signal to the skin-color component of the color difference signals of the video signals.

Third, the skin-color-correction signal is fed also to luminance signal corrector 6, and signal correction responding to the skin-color correction signal is applied to the skin color component of the luminance signal of video signals.

Each input can be multiplied by coefficients when necessary before computation, which is the same story as the first exemplary embodiment.

According to the second exemplary embodiment, the skin-color can be optimumly corrected through detecting the average luminance level of the skin-color component as well as the average luminance level in one frame.

### Third Exemplary Embodiment

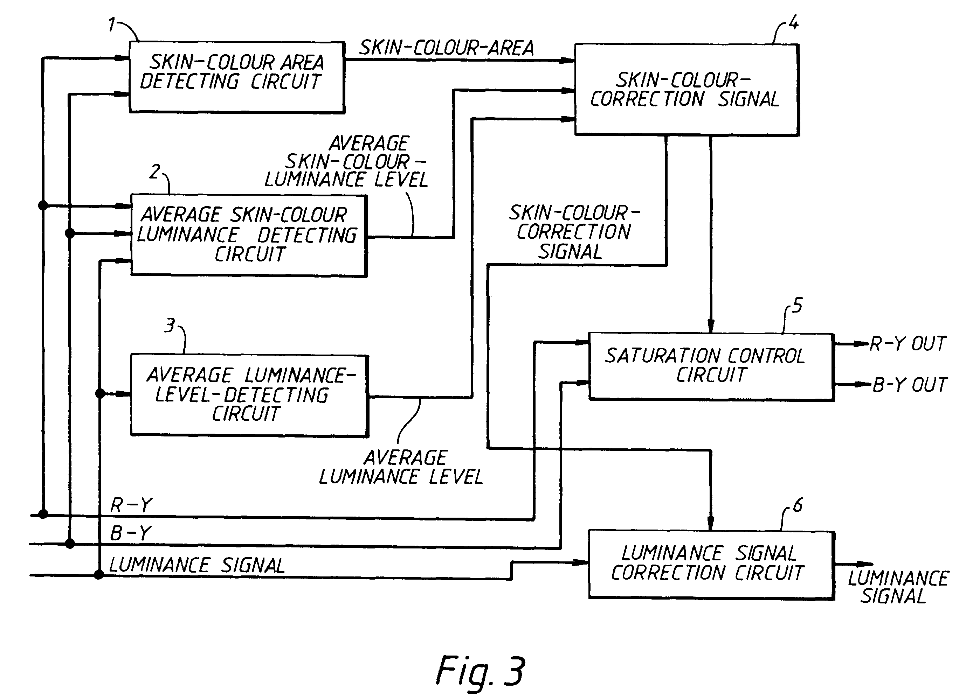

Fig. 3 is a block diagram illustrating the skin-color reproduction circuit of a third exemplary embodiment according to the present invention.

In Fig. 3, average skin-color-luminance-level detector 2 which is used in the second exemplary embodiment is added to the configuration of the first exemplary embodiment. Since other than this point is same as the first exemplary embodiment, detailed description is omitted.

An operation of the third exemplary embodiment having the above configuration is explained here:

First, at skin-color-area detector 1 in Fig. 3, the skin-color area in one frame is detected from the color difference signals R-Y, B-Y of input video signals, and then the result of detecting is transduced into a voltage.

Second, at average skin-color-luminance-level detector 2, the average skin-color-luminance-level in one frame is detected from the color difference signals of input video signals, and then the result of detecting is transduced into a voltage.

Third, at average-luminance-level detector 3, the average luminance in one frame is detected from the luminance signals of input video signals, then the result of detecting is transduced into a voltage. Each output from the detectors is not limited to a voltage but can be an electric current.

The detected values are fed to skin-color-corrector 4 shown in Fig. 3 to produce the skin-color-correction signal responding to the skin-color-area in one frame as well as the average skin-color-luminance-level in one frame, and the produced signal is transduced into a voltage or an electric current before output. The output skin-color-correction signal is first fed to saturation controller 5, then a saturation control responding to the skin-color-correction signal from skin-color corrector 4 is applied to the skin-color components of the color difference signals R-Y, B-Y of video signals.

The skin-color-correction signal is also fed to luminance-signal-corrector 6, and a signal correction responding to the skin-color-correction signal is applied to the skin-color component of the luminance signal.

Each input can be multiplied by coefficients when necessary before computation, which is the same story as the first exemplary embodiment.

According to the third exemplary embodiment, an optimal skin-color correction for reproducing the more live skin-color responding to the skin color condition (area and luminance) in the video signal as well as the average luminance level is achieved by detecting the skin-color-area in one frame, the average skin-color-luminance-level in one frame and the average luminance level in one frame.

Each output from the skin-color-detector, average skin-color luminance-level detector, average luminance detector, skin-color corrector, etc. may be either analog value or digital value depending on the configuration in use.

Regarding detailed configurations of each block, conventional ones may be combined to use as far as the spirit of the present invention is maintained.

Not to mention, "one frame" in the above description can be replaced with "one field" without entailing any functional changes.

According to the skin-color-corrector of video signals of the present invention, an optimal correction to the skin-color responding to the skin-color-area and average luminance level of video signals can be achieved.

Further, an optimal correction to the skin-color responding to the average skin-color-luminance-level and average luminance level of video signals can be achieved.

Further, an optimal correction to the skin-color responding to the skin-color-area, average skin-color-luminance-level, and average luminance level of video signals can be also achieved.

The present invention thus enables TV viewers to appreciate an optimumly corrected skin-color, which produces a great practical benefit.

## Claims

1. A skin colour enhancement circuit for enhancing the reproduction of skin-colour in a video signal, said video signal including at least two colour difference signals and a luminance signal, each signal having a respective skin-colour component, said circuit comprising at least one of:
a skin colour area detector (1) arranged to detect an area which is of skin colour in one frame of said video signal from said colour difference signals, and to output a skin colour area signal corresponding to said detected area; and/or
an average skin-colour luminance level detector (2) arranged to detect an average skin-colour luminance level in one frame of said video signal from said colour difference signals and said luminance signal, and to output an average skin-colour luminance signal corresponding to the detected average skin-colour luminance level;
and further comprising:
an average luminance level detector (3) arranged to detect an average luminance level in one frame of said video signal from said luminance signal, and to output an average luminance-level signal corresponding to the detected average luminance level;
skin colour correction means (4) arranged to receive said average luminance level signal in combination with at least one of said skin colour area signal and/or said average skin-colour luminance level signal in one frame of said video signal, and to generate a skin-colour correction signal therefrom;
saturation control means (5) arranged to receive said skin-colour correction signal, and to apply a saturation control to the skin-colour components of said colour difference signals in response to said skin-colour correction signal; and
luminance signal correction means (6) arranged to receive said skin-colour correction signal and to apply a signal correction in response to said skin-colour correction signal to the skin-colour component of the luminance signal whereby the respective skin-colour component in each of said colour difference signals and said luminance signal is thus corrected.

2. A skin colour enhancement circuit according to claim 1, wherein both of said skin-colour area detector (1) and said average skin-colour luminance level detector (2) are used, and said skin-colour correction means (4) receives both the skin-colour area signal and the average skin-colour luminance level signal.

3. A skin-colour enhancement circuit according to claim 1, wherein said skin colour area detector (1) is not used and said skin colour correction means (4) does not receive said skin-colour area signal.

4. A skin-colour enhancement circuit according to claim 1 wherein said average skin-colour luminance level detector (2) is not used and said skin-colour correction means (4) does not receive said average skin-colour luminance level signal.

5. A skin-colour enhancement circuit according to any of the preceding claims, wherein
said saturation control means (5) respectively multiplies each skin colour component of the colour difference signals by first and second coefficients in response to said skin-colour correction signal; and
said luminance signal correction means (6) multiplies the skin-colour component of the luminance signal by a third coefficient in response to said skin-colour correction.

6. A skin-colour enhancement circuit according to any of the preceding claims, wherein said video signal may be formatted into either frames or fields.

7. A skin-colour enhancement circuit according to any of the preceding claims wherein any of said signals may be either electric voltage signals or electric current signals.

## Patentansprüche

1. Hautfarbe-Verbesserungsschaltung zum Verbessern der Wiedergabe von Hautfarbe in einem Videosignal, wobei das Videosignal wenigstens zwei Farbdifferenzsignale und ein Helligkeitssignal umfaßt, wobei jedes Signal eine entsprechende Hautfarbenkomponente aufweist, wobei die Schaltung wenigstens einen der folgenden Detektoren umfaßt:
einen Hautfarbebereich-Detektor (1) zum Feststellen eines Bereichs mit Hautfarbe in einem Bild des Videosignals aus den Farbdifferenzsignalen und zum Ausgeben eines Hautfarbebereich-Signals in Übereinstimmung mit dem festgestellten Bereich, und/oder
einen Durchschnittliche-Hautfarbenhelligkeitsstufe-Detektor (2) zum Feststellen der durchschnittlichen Hautfarbenhelligkeitsstufe in einem Bild des Videosignals aus den Farbdifferenzsignalen und dem Helligkeitssignal sowie zum Ausgeben eines Durchschnittliche-Hautfarbenhelligkeit-Signals in Übereinstimmung mit der festgestellten durchschnittlichen Hautfarbenhelligkeitsstufe,
und weiterhin umfaßt:
einen Durchschnittliche-Helligkeitsstufe-Detektor (3) zum Feststellen der durchschnittlichen Helligkeitsstufe in einem Bild des Videosignals aus dem Helligkeitssignal und zum Ausgeben eines Durchschnittliche-Helligkeitsstufe-Signals in Übereinstimmung mit der festgestellten Helligkeitsstufe.
eine Hautfarbe-Korrektureinrichtung (4) zum Empfangen des Durchschnittliche-Helligkeitsstufe-Signals in Kombination mit wenigstens dem Hautfarbebereich-Signal und/oder dem Hautfarbenhelligkeitsstufe-Signal in einem Bild des Videosignals und zum Erzeugen eines entsprechenden Hautfarbe-Korrektursignals,
eine Sättigungs-Steuereinrichtung (5) zum Empfangen des Hautfarbe-Korrektursignals und zum Anwenden einer Sättigungssteuerung auf die Hautfarbenkomponenten der Farbdifferenzsignale in Übereinstimmung mit dem Hautfarbe-Korrektursignal, und
eine Helligkeitssignal-Korrektureinrichtung (6) zum Empfangen des Hautfarbe-Korrektursignals und zum Anwenden einer Signalkorrektur in Übereinstimmung mit dem Hautfarbe-Korrektursignal auf die Hauffarbenkomponente des Helligkeitssignals, wodurch die entsprechende Hauffarbenkomponente in jedem der Farbdifferenzsignale und dem Helligkeitssignal korrigiert wird.

2. Hautfarbe-Verbesserungsschaltung nach Anspruch 1, wobei sowohl der Hautfarbebereich-Detektor (1) wie der Durchschnittliche-Hautfarbenhelligkeitsstufe-Detektor (2) verwendet werden und wobei die Hautfarbe-Korrektureinrichtung (4) das Hautfarbebereich-Signal und das Durchschnittliche-Hautfarbenhelligkeitsstufe-Signal empfängt.

3. Hautfarbe-Verbesserungsschaltung nach Anspruch 1, wobei der Hautfarbebereich-Detektor (1) nicht verwendet wird und die Hautfarbe-Korrektureinrichtung (4) das Hautfarbebereich-Signal nicht empfängt.

4. Hautfarbe-Verbesserungsschaltung nach Anspruch 1, wobei der Durchschnittliche-Hautfarbenhelligkeitsstufe-Detektor (2) nicht verwendet wird und die Hautfarbe-Korrektureinrichtung (4) das Durchschnittliche-Hautfarbenhelligkeitsstufe-Signal nicht empfängt.

5. Hautfarbe-Verbesserungsschaltung nach wenigstens einem der vorstehenden Ansprüche, wobei
die Sättigungssteuereinrichtung (5) jeweils jede Hautfarbenkomponente der Farbdifferenzsignale mit ersten und zweiten Koeffizienten in Übereinstimmung mit dem Hautfarbe-Korrektursignal multipliziert, und
die Helligkeitssignal-Korrektureinrichtung (6) die Hauffarbenkomponente des Helligkeitssignals mit einem dritten Koeffizienten in Übereinstimmung mit der Hautfarbekorrektur multipliziert.

6. Hautfarbe-Verbesserungsschaltung nach wenigstens einem der vorstehenden Ansprüche, wobei das Videosignal in entweder Bildern oder Halbbildern formatiert sein kann.

7. Hautfarbe-Verbesserungsschaltung nach wenigstens einem der vorstehenden Ansprüche, wobei jedes der Signale entweder ein elektrisches Spannungssignal oder ein elektrisches Stromsignal sein kann.

## Revendications

1. Circuit d'amélioration de couleur de peau pour améliorer la reproduction de la couleur de peau dans un signal vidéo, ledit signal vidéo incluant au moins deux signaux de différence de couleur et un signal de luminance, chaque signal comportant une composante de couleur de peau respective, ledit circuit comprenant au moins un élément pris parmi :
un détecteur d'aire de couleur de peau (1) agencé pour détecter une aire qui est en couleur de peau dans une image dudit signal vidéo à partir desdits signaux de différence de couleur et pour émettre en sortie un signal d'aire de couleur de peau correspondant à ladite aire détectée ; et
un détecteur de niveau de luminance de couleur de peau moyen (2) agencé pour détecter un niveau de luminance de couleur de peau moyen dans une image dudit signal vidéo à partir desdits signaux de différence de couleur et dudit signal de luminance et pour émettre en sortie un signal de luminance de couleur de peau moyen correspondant au niveau de luminance de couleur de peau moyen détecté, et comprenant en outre :
un détecteur de niveau de luminance moyen (3) agencé pour détecter un niveau de luminance moyen dans une image dudit signal vidéo à partir dudit signal de luminance et pour émettre en sortie un signal de niveau de luminance moyen correspondant au niveau de luminance moyen détecté ;
un moyen de correction de couleur de peau (4) agencé pour recevoir ledit signal de niveau de luminance moyen en combinaison avec au moins un signal pris parmi ledit signal d'aire de couleur de peau et ledit signal de niveau de luminance de couleur de peau moyen dans une image dudit signal vidéo et pour générer à partir du résultat un signal de correction de couleur de peau ;
un moyen de commande de saturation (5) agencé pour recevoir ledit signal de correction de couleur de peau et pour appliquer une commande de saturation sur les composantes de couleur de peau desdits signaux de différence de couleur en réponse audit signal de correction de couleur de peau ; et
un moyen de correction de signal de luminance (6) agencé pour recevoir ledit signal de correction de couleur de peau et pour appliquer une correction de signal en réponse audit signal de correction de couleur de peau à la composante de couleur de peau du signal de luminance de telle sorte que la composante de couleur de peau respective dans chaque signal pris parmi lesdits signaux de différence de couleur et ledit signal de luminance soit ainsi corrigée.

2. Circuit d'amélioration de couleur de peau selon la revendication 1, dans lequel ledit détecteur d'aire de couleur de peau (1) et ledit détecteur de niveau de luminance de couleur de peau moyen (2) sont tous deux utilisés et ledit moyen de correction de couleur de peau (4) reçoit à la fois le signal d'aire de couleur de peau et le signal de niveau de luminance de couleur de peau moyen.

3. Circuit d'amélioration de couleur de peau selon la revendication 1, dans lequel ledit détecteur d'aire de couleur de peau (1) n'est pas utilisé et ledit moyen de correction de couleur de peau (4) ne reçoit pas ledit signal d'aire de couleur de peau.

4. Circuit d'amélioration de couleur de peau selon la revendication 1, dans lequel ledit détecteur de niveau de luminance de couleur de peau moyen (2) n'est pas utilisé et ledit moyen de correction de couleur de peau (4) ne reçoit pas ledit signal de niveau de luminance de couleur de peau moyen.

5. Circuit d'amélioration de couleur de peau selon l'une quelconque des revendications précédentes, dans lequel :
ledit moyen de commande de saturation (5) multiplie respectivement chaque composante de couleur de peau des signaux de différence de couleur par des premier et second coefficients en réponse audit signal de correction de couleur de peau ; et
ledit moyen de correction de signal de luminance (6) multiplie la composante de couleur de peau du signal de luminance par un troisième coefficient en réponse à ladite correction de couleur de peau.

6. Circuit d'amélioration de couleur de peau selon l'une quelconque des revendications précédentes, dans lequel ledit signal vidéo peut être formaté selon soit des images, soit des trames.

7. Circuit d'amélioration de couleur de peau selon l'une quelconque des revendications précédentes, dans lequel n'importe lesquels desdits signaux peuvent être soit des signaux de tension électrique, soit des signaux de courant électrique.
